Europäisches Patentamt

European Patent Office

Office européen des brevets

(11) Publication number: **0 175 663**
**A2**

# (12) EUROPEAN PATENT APPLICATION

(21) Application number: **85850251.1**

(22) Date of filing: **31.07.85**

(51) Int. Cl.⁴: **G 03 B 42/02**

(30) Priority: **21.09.84 SE 8404741**

(43) Date of publication of application: **26.03.86**
**Bulletin 86/13**

(84) Designated Contracting States: **AT BE CH DE FR GB IT LI LU NL**

(71) Applicant: **Dahn, Stig, S. Skogsrundan 47, S-184 00 Akersberga (SE)**

(72) Inventor: **Dahn, Stig, S. Skogsrundan 47, S-184 00 Akersberga (SE)**

(74) Representative: **Omming, Allan, A. OMMING & CO. AB Sveavägen 28-30, S-111 34 Stockholm (SE)**

(54) **An apparatus assembly for producing a shadow image of objects with the aid of x-rays.**

(57) Apparatus for producing a shadow image of an object (12) by means of X-rays comprises a housing (1) which accommodates an X-ray source (2) directed onto a fluorescent screen. Located between the screen and the radiation source is an object station (15). In accordance with the invention there is located between the object station (15) and the screen (4) an X-ray permeable mirror (16) which is positioned obliquely in relation to the radiation path (3) and which is adapted to project a section of the screen onto a television camera (17) which is arranged on one side of the radiation path (3) and which is connected to a television monitor (36) in order to show this section of the screen.

## An apparatus assembly for producing a shadow image of objects with the aid of X-rays.

The present invention relates to apparatus for producing a shadow image of objects with the aid of X-rays, the apparatus comprising a housing which accommodates an X-ray source from which a radiation beam is directed along a beam path onto a fluorescent screen; an object X-raying station located between the screen and the X-ray source, said screen being adapted to produce thereon an image of the object X-rayed in the X-ray station; and an opening in the housing through which the screen can be observed.

Apparatus assemblies such as this are normally used for examining foundry products and the like, for the nondestructive testing of materials, and for checking the contents of passenger luggage and other goods in air terminals for example.

The fluorescent screen of an apparatus assembly of the aforementioned kind often measures 80 x 60 cm for example, so as to enable an average sized suitcase to be examined in its entirety, without opening the case. In order to screen the surroundings against radiation, the whole of the apparatus assembly is contained in a steel-plate box or housing lined internally with lead, and infeed ports or openable doors or flaps are provided in the housing to enable objects to be passed to and from the object X-raying station.

One disadvantage with apparatus assemblies of this kind is that the fluorescent screen produces an image of relatively low luminance and poor contrast, which renders the objects shown in the image less discernible, and when it is suspected, for example, that a suitcase contains a non-permitted item a further check must be made or the suitcase opened. Problems concerned with the lack of sharpness increase with increasing thickness of the examined objects, since the luminance of the image produced on the screen becomes weaker with increasing object thicknesses. When attempting to compensate for this weakness in picture luminance by increasing the penetrating effect of the beam, picture contrast becomes excessively weak in the case of lightweight materials, such as plastics for example.

One solution to this problem is to replace the fluorescent screen with an electron image amplifier, which normally presents the image on the screen of a television monitor. The availability of such apparatus, however, is often excluded on cost grounds when requiring a total image of a relatively large X-rayed object. It can mentioned by way of example that at present day prices the image amplification tube alone, if its input aperture - diameter - is 37 cm, will cost about 0.5 MSEK.

Another solution, although too expensive to be realized in practice, is one of using an extremely light-sensitive television camera to reproduce the whole of the fluorescent screen for study of the image on a television monitor. In this case, the camera is placed in a light-impervious and radiation-shielding hood in front of the fluorescent screen. Since the camera is able to distinguish poorer contrasts than the human eye, discernibility can be greatly improved with the aid, for example, of digital image processing techniques. As beforementioned, a large observable image area is desired when examining large objects, and if the possibility of studying the whole of the image is to be provided, apparatus of this kind become cost prohibitive.

When reproducing large images, picture quality is also impaired as a result of the limited line density of the monitor, e.g. a density of 625 lines.

A prime object of the present invention is therefore to provide a simple and relatively inexpensive apparatus assembly of the aforesaid kind which will enable the whole of the screen image to be studied and permit selective parts of the image to be shown with improved sharpness on a television monitor and studied in detail thereon

This object is realized by means of the present invention as defined in the claims and described hereinafter with reference to the accompanying drawing, in which

3

Figure 1 is a vertical sectional view of an embodiment of the invention; and

Figure 2 is a sectional view taken on the line II-II in Figure 1.

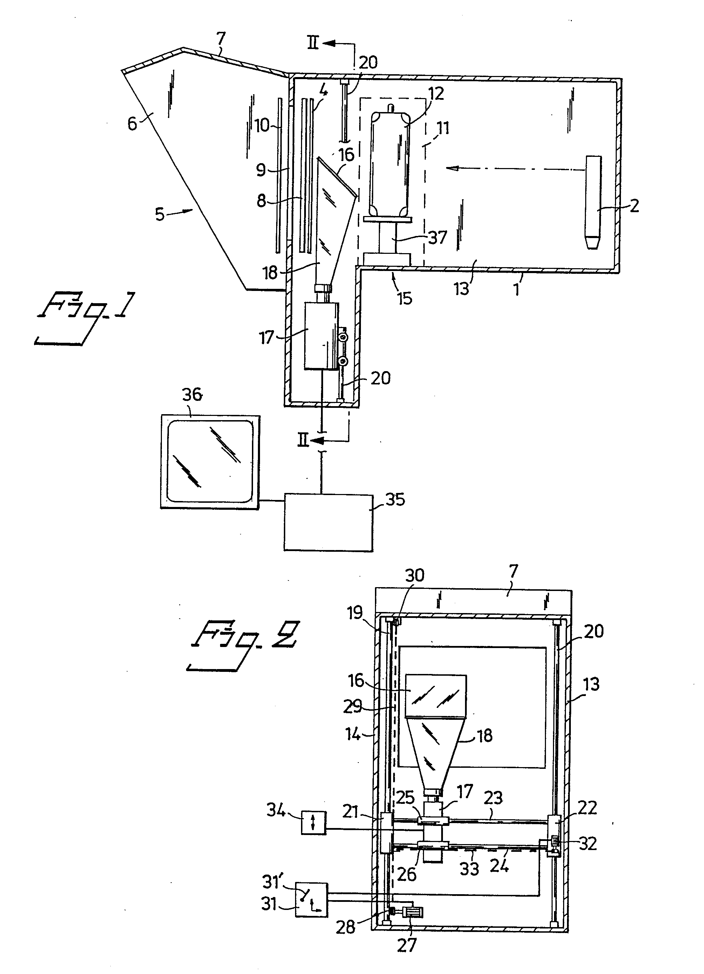

The illustrated embodiment comprises a housing 1, which may be comprised of sheet-steel or plywood for example, and which is lined on the inner surfaces thereof with lead plate for absorption of the X-rays emitted from a source 2 of X-ray radiation, this source being adapted to emit a beam of X-rays along a path referenced 3 in Figure 1.

Arranged in the housing 1 substantially at right angles to the X-ray beam emitted from the source 2 is a fluorescent screen 4 of conventional construction. The fluorescent coating is applied to a surface of a glass or plastics plate facing the radiation source 2. The image produced can be studied through the plate from the exposed opening 5 located in a light-screening shaft comprising two vertical light-screening plates, of which one, 6, is shown in Figure 2 and the upper edges of which plates are connected to a light-screening ceiling structure 7. A lead-glass plate 8 is suitably arranged behind the screen 4 and inwardly of an image opening or aperture 9 provided in the housing 1. A so-called one-way mirror 10 may be placed in front of the aperture 9 to prevent, as far as possible, stray light from reaching the fluorescent screen 4. While such a mirror 10 will prevent light from reaching the screen, the light emitted from the screen 4 will be dampened to only an insignificant extent. The broken line 11 in Figure 1 identifies an openable lead-coated flap through which the object to be examined is introduced into the housing, this object being shown in the form of a suitcase 12.

The flap 11 of the illustrated embodiment is located in vertical wall 13 of the housing 1. A corresponding flap is suitably located in the opposing wall 14 of the housing 1, to enable objects to be conveyed through the housing 1 in a more or less continuous stream, with the aid of a conveyor belt, for example.

4

In the illustrated embodiment, the suitcase 12 is assumed to be supported on a manipulator 37, by means of which the suitcase can be raised and lowered and rotated about a vertical axis when occupying an X-raying station, i.e. the object X-raying station 15.

In accordance with the invention there is arranged in the path of the X-ray beam, between the station 15 and the screen 4, a mirror 16, preferably a plastics plate coated with a thin reflective metal layer. Such a mirror will have only an insignificant damping effect on the X-ray radiation and, when its plane forms an angle of, for example, $45^{\circ}$ with the plane of the screen 4, will present to a separate light-sensitive television camera 17 a reproduction of a section of the screen 4 corresponding to the size of the mirror 16, said camera 17 being mounted in the housing 1 and the optical axis of said camera extending perpendicularly to the path of the X-ray beam. The aforesaid angle may, of course, be given any appropriate value while making corresponding changes to the optical axis of the camera 17.

In the illustrated embodiment, the mirror 16 is fixed to the camera housing by means of a thin plastic "funnel" 18, which has no appreciable damping effect on the X-ray beam. The camera 17, together with the funnel and mirror, can be moved vertically and horizontally, so as to enable the mirror 16 to be positioned in relation to any selected section of the screen image of which a closer study is desired subsequent to having viewed the image obtained on the screen with the naked eye, through the apertures 5,9. Vertical movement is effected through the agency of two vertical guide means 19,20 firmly mounted on the inside of the housing 1 and comprising rods of circular cross-section. Slidably mounted on the rods 19 and 20 are respective slide sleeves 21,22 having located therebetween two similar rods or guides 23,24. Slidably mounted on respective rods 23,24 are slide sleeves 25,26, these sleeves being firmly mounted on the camera 17. A drive motor 27 for effecting said vertical movement is connected, via a sprocket wheel 28 mounted on the motor shaft, to an endless chain 29 which is connected to the slide sleeve 21 and which extends over an upper sprocket wheel 30. The camera 17 is thus moved vertically by starting the motor, from a control box 31 shown in simplified form in Figure 2. Horizontal movement of the camera 17 and the mirror 16 connected thereto is effected by means of a drive motor 32, which correspondingly drives an endless chain 33 connected to the slide sleeve 26. The motor 32 is also controlled from the control box 31 located externally of the housing 1, said box being conveniently provided with a lever 31 for activating an appropriate motor 27 or 32. The camera is preferably provided with a motor-driven zoom lens capable of being controlled from a control means 34 located externally of the housing 1.

Since only a relatively small part, e.g. 10 x 15 cm, of the area of the screen 4, e.g. 80 x 60 cm, shall be produced with the aid of the camera 17, the inlet aperture thereof may be relatively small and therewith also the cost of the camera, the sum involved being about 10-20 TSEK at present day prices. The signal from the camera 17 is preferably processed in an electronic image processor 35 (Figure 1) before being reproduced on the television monitor 36. This enables, for example, the image contrast to be considerably heightened, contrast differences to be colored, the image to be enlarged, the image to be electronically locked temporarily, or the image to be documented by reproduction. With the aid of accumulating image technology, it is possible to reproduce images of a screen where the light is extremely weak, by employing an exposure time of 10-20 seconds for example. To make detection of extremely small differences in contrast possible, for example narcotics in comparison with tea, an X-ray beam of the smallest possible penetrating power must be used, resulting in a dim image, which can nevertheless be improved and greatly amplified. Since the mirror 16 reproduces the fluorescent outer layer of the screen 4, the best possible image resolution is obtained. The mirror 16 creates no appreciable distortion of the image due to shadow effect. The described one-way mirror 10 has been found to provide a clear improvement of the image on the screen 4, since external light will not then affect the fluorescent image.

In the aforegoing it has been assumed that the mirror 16 is firmly mounted on the camera 17 and that the camera is movable. Even though this arrangement is to be preferred, there can be used a mirror 16 which is independent of the camera 17 which can be adjusted vertically or horizontally and rotated to any desirable position. In this case, the camera 17 must be manouverable to scan the image on the mirror. In order to enable the section reproduced on the mirror 16 for analysis with the camera 17 to be identified readily and positively, the mirror may have located thereon a grid, a cross or some other reference marking for reproduction on the image screen 4.

A simpler alternative to the aforedescribed apparatus assembly is one in which the mirror and television camera are placed in fixed positions, and in which the camera reproduces a central part on the fluorescent screen, which affords the best analysis possibility. In this case, it is necessary to move the object under examination, so that the relevant part of the object is located in the central area of the screen. This requires the provision of a movement mechanism in the region of the object, for example of the kind indicated with the manipulator 37 in Figure 1.

CLAIMS

1. An apparatus assembly for producing a shadow image of an object (12) with the aid of X-rays, comprising a housing (1) having arranged therein an X-ray source(2)adapted to direct a beam of X-rays along a path (3) onto a fluorescent screen (4); an object X-raying station (15) located between the screen and the object, said screen being adapted to reproduce the image of the X-rayed object; and an opening (5, 9) located in the housing (1) for viewing the image on the screen (4), characterized in that an X-ray permeable mirror (16) is located between the station (15) and the screen (4) in the path (3) of the X-ray beam and at an angle to said beam, said mirror being adapted to project a section of the screen onto a television camera (17) positioned on one side of the X-ray beam path (3) and connected to a television monitor (36) so as to show said section of the screen (4).

2. An apparatus assembly according to Claim 1, characterized in that the television camera (17) and the mirror (16) are interconnected; and in that means (19,20,21,22,23, 24,25,26,27, 32) are provided for moving the television camera (17) and the mirror (16) relative to the screen (4).

3. An apparatus assembly according to Claim 2, characterized in that the television camera (17) is mounted on guides (19,20,23,24) for movement of the television camera in a right angular coordinate system.

4. An apparatus assembly according to Claim 1, characterized in that the mirror (16) forms an angle of 45° with the screen (4).

5. An apparatus assembly according to any one of Claims 1-4, characterized in that the television camera (17) is provided with a motor-driven zoom lens; and in that the motor can be manouvered by means of control means (34) located externally of the housing.

6. An apparatus assembly according to any one of Claims 1-5, characterized in that an electronic digital image-signal processor (35) is arranged in the transmission link

8

between the television camera (17) and the television monitor (36).

7. An apparatus assembly according to Claim 1, characterized in that means are provided for moving the mirror in the beam path relative to the television camera.

8. An apparatus as embly according to any one of Claims 1-7, characterized in that the surface of the screen (4) remote from the object (12) is protected against external light by means of a plate (10) which is permeable to light in solely one direction.

9. An apparatus assembly according to any one of Claims 1-8, characterized in that the mirror (16) comprises a plastics plate coated with metal on one surface thereof.

10. An apparatus assembly according to Claim 1, characterized in that the television camera (17) and the mirror (16) are fixedly mounted in relation to the fluorescent screen (4); and in that the object (12) is arranged for movement in the radiation beam (3).

0175663

1/1

Fig.1

Fig.2